# EUROPEAN PATENT APPLICATION

(11) **EP 4 776 635 A1**
(43) Date of publication of application: **15.07.2026**
(21) Application number: 24862009.8
(22) Date of filing: 04.09.2024
(51) Int. Cl.: H04N 21/472

(54) **IMAGE EDITING METHOD AND APPARATUS, DEVICE, AND STORAGE MEDIUM**

(30) Priority: 08.09.2023 CN 202311161804
(71) Applicant: Beijing Zitiao Network Technology Co., Ltd., Beijing 100190 (CN)
(72) Inventor: YUE, Jingxiang, Beijing 100028 (CN); CHEN, Chen, Beijing 100028 (CN)
(74) Representative: Grünecker Patent- und Rechtsanwälte PartG mbB
(86) International application number: PCT/CN2024/116982
(87) International publication number: WO 2025/051169

(57) **Abstract**

According to embodiments of the disclosure, a method, apparatus, device and storage medium for image editing is provided. The method includes: receiving, in an edit interface of a target image, a selection on a predetermined type of first effect object by a user; in response to the selection on the first effect object, rendering a second layer corresponding to the first effect object on a first layer corresponding to the target image, and rendering a third layer corresponding to at least one subject object in the target image on the second layer; and obtaining, based on an edit operation or a confirmation operation by the user on the first effect object, an edited target image by determining the edited or confirmed first effect object in the second layer, the edited target image including the first layer, the second layer, and the third layer. In this way, a sandwich presentation of the effect object can be realized, and the user is allowed to freely edit the effect object of a sandwich layer, which satisfies the diversified effect edit requirements of the user.

## Description

This application claims priority of Chinese Patent Application No. 202311161804.5, filed September 08, 2023, and entitled "METHOD, APPARATUS, DEVICE AND STORAGE MEDIUM FOR IMAGE EDITING", the entire content of which is incorporated herein by reference.

### FIELD

Example embodiments of the present disclosure generally relate to information processing, and in particular, to a method, apparatus, device, and computer-readable storage medium for image editing.

### BACKGROUND

Currently, more and more applications are designed to provide various services to users. For example, a user may create, browse, comment, and forward various types of content in an application, including various media content such as videos, images, image sets, audio, and the like. In addition, these applications also support interaction with the user to facilitate the user to perform content photographing and content creating. The effect function may also be provided for the user during content creation. For example, a user may add some effect elements to the created content, such as animals, scenes, items, or the like.

### SUMMARY

In a first aspect of the present disclosure, a method of image editing is provided. The method comprises: receiving, in an edit interface of a target image, a selection on a predetermined type of first effect object by a user; in response to the selection on the first effect object, rendering a second layer corresponding to the first effect object on a first layer corresponding to the target image, and rendering a third layer corresponding to at least one subject object in the target image on the second layer; and obtaining, based on an edit operation or a confirmation operation by the user on the first effect object, an edited target image by determining the edited or confirmed first effect object in the second layer, the edited target image comprising the first layer, the second layer, and the third layer.

In a second aspect of the present disclosure, an apparatus for image editing is provided. The apparatus comprises: a selection receiving module configured to receive, in an edit interface of a target image, a selection on a predetermined type of first effect object by a user; a rendering module configured to in response to the selection on the first effect object, render a second layer corresponding to the first effect object on a first layer corresponding to the target image, and render a third layer corresponding to at least one subject object in the target image on the second layer; and an image determining module configured to obtain, based on an edit operation or a confirmation operation by the user on the first effect object, an edited target image by determining the edited or confirmed first effect object in the second layer, the edited target image comprising the first layer, the second layer, and the third layer.

In a third aspect of the present disclosure, an electronic device is provided. The electronic device includes at least one processing unit; and at least one memory being coupled to the at least one processing unit and storing instructions for execution by the at least one processing unit. The instructions, when executed by the at least one processing unit, cause the electronic device to perform the method according to the first aspect of the present disclosure.

In a fourth aspect of the present disclosure, a computer-readable storage medium is provided. The computer-readable storage medium has a computer program stored thereon, and the computer program is executable by the processor to perform the method according to the first aspect of the present disclosure.

It should be understood that the content described in this section is not intended to limit the key features or important features of embodiments of the present disclosure, nor is it intended to limit the scope of the present disclosure. Other features of the present disclosure will become easy to understood from the following description.

### BRIEF DESCRIPTION OF DRAWINGS

In the following, the above and other features, advantages and aspects of the various implementations of the present disclosure will become more apparent in combination with the accompanying drawings and with reference to the following detailed description. In the accompanying drawings, the same or similar reference symbols refer to the same or similar elements, wherein:
FIG. 1 shows a schematic diagram of an example environment in which embodiments of the present disclosure can be implemented;
FIG. 2 shows a flowchart of a process of image editing according to some embodiments of the present disclosure;
FIG. 3A to FIG. 3D show schematic diagrams of example edit interface according to some embodiments of the present disclosure;
FIG. 4A and FIG. 4B show schematic diagrams of an example edit interface of a target image including a plurality of subject objects according to some embodiments of the present disclosure;
FIG. 5A to FIG. 5C show schematic diagrams of an example edit interface of a target image including a plurality of effect objects according to some embodiments of the present disclosure;
FIG. 6 illustrates a schematic diagram of a process of rendering a layer according to some embodiments of the present disclosure;
FIG. 7A to FIG. 7C show schematic diagrams of example images for subject segmentation according to some embodiments of the present disclosure;
FIG. 8 shows a schematic structural block diagram of an apparatus for image editing according to some embodiments of the present disclosure; and
FIG. 9 shows a block diagram of an electronic device that may be used to implement some embodiments of the present disclosure.

### DETAILED DESCRIPTION

Embodiments of the present disclosure will be described in more detail below with reference to the accompanying drawings. Although some embodiments of the present disclosure are shown in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the accompanying drawings and embodiments of the present disclosure are only for the purpose of illustration and are not intended to limit the scope of protection of the present disclosure.

In the description of embodiments of the present disclosure, the term "including" and similar terms may be understood as open inclusion, that is, "including but not limited to". The term "based on" may be understood as "at least partly based on". The term "one embodiment" or "the embodiment" may be understood as "at least one embodiment". The term "some embodiments" may be understood as "at least some embodiments". Other explicit and implicit definitions may also be included below.

The term "in response to" represents that a corresponding event occurs or condition is satisfied. It will be appreciated that the performing time of subsequent actions performed in response to the event or condition may not be strongly associated with the time at which the event occurs or the condition is satisfied. In some cases, subsequent actions may be performed immediately when the event occurs or the condition is satisfied; in other cases, subsequent actions may also be performed after a time period after the event occurs or the condition is satisfied.

It may be understood that the data involved in the technical solution (including but not limited to the data itself, the acquisition or use of the data) should follow the requirements of the corresponding laws and regulations and related rules.

It may be understood that, before the technical solutions disclosed in the embodiments of the present disclosure are used, the types, the usage scope, the usage scenario of personal information involved in the present disclosure, and the like should be notified to the user to obtain the authorization of the user in an appropriate manner according to the relevant laws and regulations.

For example, in response to receiving an active request from a user, a prompt message is sent to the user to explicitly prompt the user that the operation requested operation by the user will need to obtain and use the user's personal information, so that users may select themselves whether to provide personal information to the software or the hardware such as an electronic device, an application, a server or a storage medium that perform the operation of the technical solution of the present disclosure according to the prompt information.

As an optional but non-restrictive implementation, in response to receiving the user's active request, the method of sending prompt information to the user may be, for example, a pop-up window in which prompt information may be presented in text. In addition, pop-up windows may also contain selection controls for users to choose "agree" or "disagree" to provide personal information to electronic devices.

It may be understood that the above notification and acquisition of user authorization process are only schematic and do not limit the implementations of the present disclosure. Other methods that meet relevant laws and regulations may also be applied to the implementation of the present disclosure.

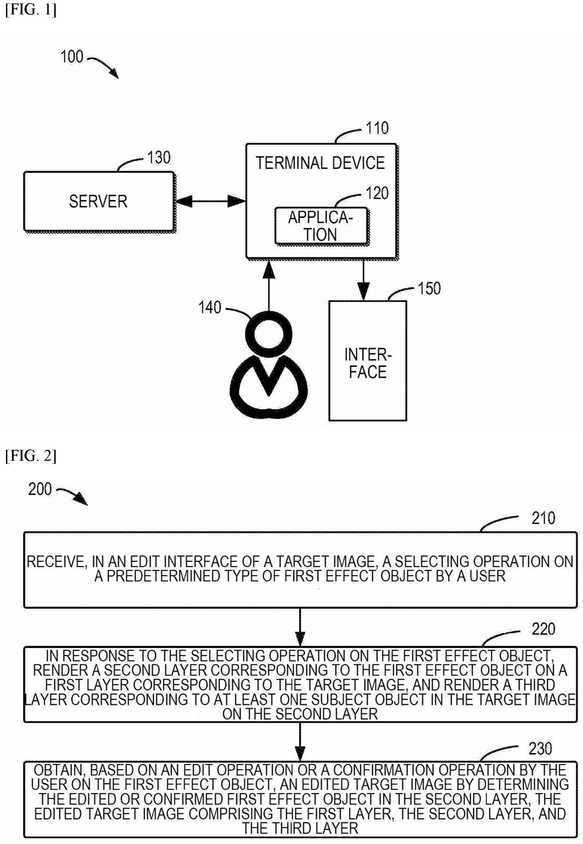

FIG. 1 illustrates a schematic diagram of an example environment 100 in which embodiments of the present disclosure may be implemented. In this example environment 100, an application 120 is installed in the terminal device 110. The user 140 may interact with the application 120 via the terminal device 110 and/or an attachment device of the terminal device 110.

In some embodiments, the application 120 may be a content sharing application capable of providing various kinds of services related to the media content item to the user 140, including browsing, commenting, forwarding, creating (e.g., photographing and/or editing), posting, and the like of the content. In some embodiments, the application 120 may be a content editing application, such as an image and/or video editing application.

In environment 100 of FIG. 1, the terminal device 110 may present interface 150 of the application 120 if the application 120 is at an active state. The interface 150 may include various pages that the application 120 may provide, such as an content presentation page, a content creating page, a content posting page, a message page, a personal homepage, and the like. The application 120 may provide a content creating function, including photographing, uploading, editing, and/or posting media content. In some implementations, the application 120 may provide a content browsing function to browse various types of content posted in the application 120. In some implementations, the application 120 may also provide an interactive function, including interacting with other users (for example, adding friends) and interacting with various types of content (including likes, favorites, comments, etc.).

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems/servers capable of providing computing power, including but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

As mentioned above, a user may be expected to add some elements into the created content, such as text, various graphics, and the like. As an example, the user may perform image editing on the image, and the user may add text information to the image by using the text item or add image elements to the image by using other sticker type effects. Typically, such text or image elements are presented overlapped directly on top of the user's image. Such image editing effect is single and may occlude critical areas of the image (e.g., subject objects of the image). In some edit scenarios, it is expected to obtain more presentation manners of sticker type effects.

To this end, embodiments of the present disclosure provide an improved image editing solution. According to the solution, a selection on a predetermined type of first effect object by a user is received in an edit interface of the image. In response to the selection, a layer corresponding to the effect object is rendered on the layer corresponding to the image, and a layer corresponding to the at least one subject object in the image is rendered on the layer corresponding to the effect object. Based on an edit operation or a confirmation operation by the user on the effect object, the effect object is determined to obtain the edited image. The edited image includes a layer corresponding to the image, a layer corresponding to the effect object, and a layer corresponding to the at least one subject object.

According to the image editing solution disclosed by the present disclosure, when the effect object is added to the edited image, the image editing process can realize the sandwich presentation of the effect object, and various rich visual effects with stereoscopic impression are obtained. In addition, the user is allowed to freely edit the effect object of the sandwich layer to satisfy diversified effect editing requirements of the user.

Some example embodiments of the present disclosure will be described below with continued reference to the accompanying drawings.

FIG. 2 shows a flowchart of a process 200 of image editing according to some embodiments of the present disclosure. The process 200 may be implemented at the terminal device 110. For ease of discussion, the process 200 will be described with reference to the environment 100 of FIG. 1. It should be noted that the foregoing operations performed by the terminal device 110 and the following operations performed by the terminal device 110 may be specifically performed by a related application installed on the terminal device 110.

In block 210, the terminal device 110 receives, in an edit interface of a target image, a selection on a predetermined type of first effect object by a user.

The "effect object" refers to a selectable visual object under an effect editing function provided in image editing. The effect editing function herein is also referred to as a template function or an item function, which refers to a function capable of at least adding a specific visual effect to an image, for example, adding a static or dynamic object to a picture, providing an interactive effect, changing a color contrast of a picture, a person makeup, and the like. In some examples, the effect object may include a dynamic effect object, such as a dynamic object with animation effects. The effect object may include a static effect object, such as an addition of a static object. In some embodiments, the effect object may include an augmented reality (AR) effect to provide an AR effect.

In some embodiments, the target image to be edited may be a single image or a video image in a video. For example, the user may be supported to edit one or more video images in the video during the video editing process. In an image editing process, a user may be allowed to request use of a specific effect object or item object.

In embodiments of the present disclosure, a selection of the predetermined type of effect object is provided to a user in an image editing process. As described in detail below, the predetermined type of effect object will be added as sandwich between the subject object and the background of the target image. This type of effect object is sometimes also referred to as a sandwich effect.

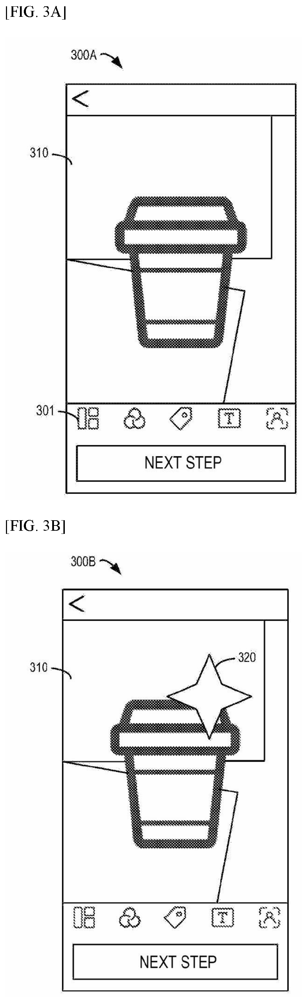

In some embodiments, the terminal device 110 may present, in an edit interface of the image, an operation control associated with selecting the effect object. FIG. 3A to FIG. 3D illustrate schematic diagrams of an example edit interface according to some embodiments of the present disclosure. As shown in FIG. 3A, at least an effect selection control 301 is presented in an edit interface 300A of a target image 310. In response to detecting a selection operation on the effect selection control 301, the terminal device 110 may present at least one type of effect object. For example, the at least one type of effect object may include, but not limited to, an effect object that may be presented at a top layer of the target image, an effect object that may be presented on a bottom layer of the target image, an effect object that may be presented between a bottom layer of the target image and a top layer of the subject object, and the like.

In the discussion of embodiments of the present disclosure, it is assumed that the user selects to add a predetermined type of effect object to the target image, that is, the effect object that may be presented between the bottom layer of the target image and the top layer of the subject object. For example, the first effect object may be any suitable object such as text, an image, an icon, a moving picture, and the like, which is not limited in the present disclosure. It should be understood that other types of effect objects may also be configured in the image edit interface according to the editing requirements, for example, an effect object rendered on the top layer.

Moreover, the terminal device 110 may present the first effect object associated with the target image in response to a selection operation on the predetermined type of first effect object. Specifically, referring to FIG. 2, in block 220, in response to the selection on the predetermined type of first effect object, the terminal device 110 renders a second layer corresponding to the first effect object on a first layer corresponding to the target image, and renders a third layer corresponding to at least one subject object in the target image on the second layer. That is, the first effect object selected by the user is rendered on the middle layer, and the layer corresponding to the subject object of the target image is further rendered on the middle layer. In this way, the added effect object may be automatically prevented from occluding the specific image subject in case of the sandwich presentation, and the sandwich and stereoscopic effects different from a common "sticker" presented on the top layer may also be presented, so that the effect object and the image are shown more fused.

As shown in FIG. 3B, in the edit interface 300B, in response to the user selecting the effect object 320, the terminal device 110 renders a layer (that is, the second layer) corresponding to the effect object 320 (that is, the first effect object) on the layer (that is, the first layer) corresponding to the target image 310. The visual effect of the edit interface 300B is that the effect object 320 is overlapped on the target image 310.

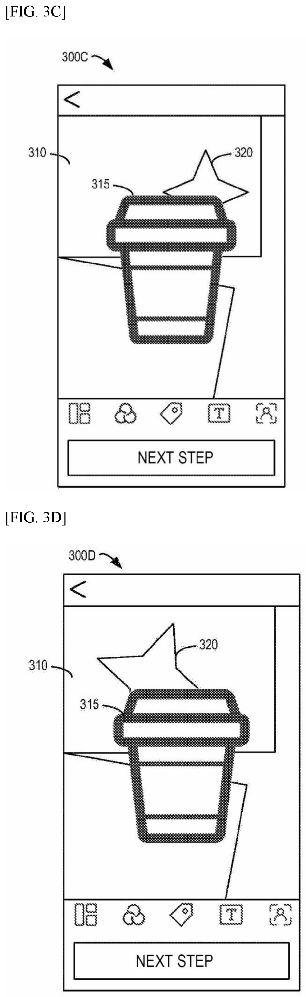

Furthermore, the terminal device 110 may further determine at least one subject object in the target image. The at least one subject object herein may be at least one object in a foreground area of the target image. The terminal device 110 may determine the layer corresponding to the at least one subject object as the third layer. The terminal device 110 may render the third layer on the second layer corresponding to the first effect object, to implement the sandwich presentation of the effect object. As shown in FIG. 3C, in the edit interface 300C, after the terminal device 110 renders the layer corresponding to the effect object 320 on the layer corresponding to the target image 310, the layer (that is, the third layer) corresponding to the subject object 315 (for example, the water cup shown in the figure) in the target image 310 may be rendered on the layer corresponding to the effect object 320.

It should be noted that the position, size, contour, and the like of the at least one subject object in the third layer are rendered to be exactly the same as the position, size, contour, and the like of the at least one subject object in the first layer. That is, after the third layer is rendered on the second layer, the at least one subject object in the third layer completely overlaps with the at least one subject object in the first layer.

In some embodiments, in order to ensure the picture editing experience of the user, the process of rendering the second layer on the first layer and rendering the third layer on the second layer is invisible to the user. That is, after rendering is completed, the edit interface 300C is presented to the user without presenting the edit interface 300B to the user. From the perspective of the user, after the selection of the predetermined type of first effect object is initiated, the edit interface 300C shown in FIG. 3C is directly seen, that is, the sandwich effect of the effect object is directly presented. In some embodiments, a layer-by-layer rendering process may also be presented to the user according to the application.

In some embodiments, the at least one subject object corresponding to the third layer may be, for example, all subject objects in the target image. Specifically, the at least one subject object may be one or more subject objects recognized automatically from the target image.

In some embodiments, the at least one subject object corresponding to the third layer may be at least a part of subject objects in the plurality of subject objects in the target image. Specifically, the rendered at the top layer may be one or more subject objects selected by the user from the subject recognizing results. In some embodiments, if a plurality of candidate subject objects are recognized from the target image, the terminal device 110 may present a subject identification corresponding to respective one of the plurality of candidate subject objects on the edit interface. The subject identification corresponding to each subject object includes at least one of the following: contour identification information for defining the subject object from the target image, or an object indicator presented at a location corresponding to the subject object in the target image.

The terminal device 110 may receives a selection of a subject identification of the at least one subject object in the plurality of candidate subject objects by the user, and renders the third layer corresponding to the at least one selected subject object on the second layer. For example, the terminal device 110 may determine, in response to detecting the selection operation on the subject identification and/or the selection operation on the subject object, that the selection of the corresponding subject object is detected. The terminal device 110 further determines a layer corresponding to the at least one selected subject object as a third layer, and renders the third layer on the second layer.

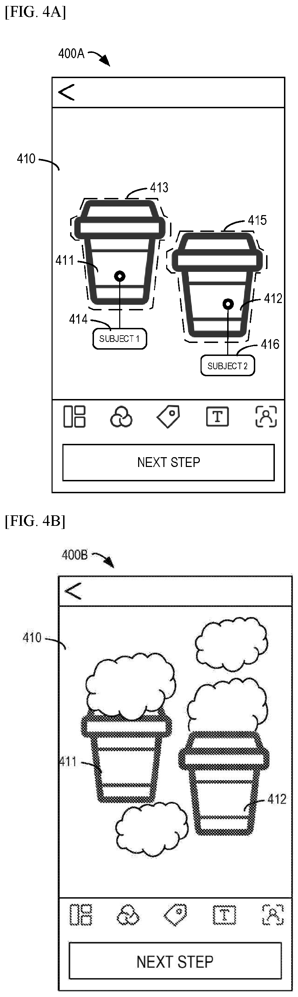

FIG. 4A and FIG. 4B show schematic diagrams of an example edit interface of a target image including a plurality of subject objects according to some embodiments of the present disclosure. As shown in FIG. 4A, in case that the target image 410 includes a plurality of candidate subject objects (subject object 411 and subject object 412), the terminal device 110 may present, on the edit interface 400A, a subject identification corresponding to respective one of the plurality of candidate subject objects. Specifically, the terminal device 110 may present the contour identification information 413 and the object indicator 414 of the subject object 411 in association with the subject object 411 on the edit interface 400A. The terminal device 110 may present the contour identification information 415 and the object indicator 416 of the subject object 412 in association with the subject object 412 on the edit interface 400A. The contour identification information (including the contour identification information 413 and the contour identification information 414) may be used to finely represent a contour of a corresponding subject object, or to define each subject object from a target image using such as a bounding box. The object indicator 414 and the object indicator 416 may include, for example, respective anchor points and labels (e.g., label "subject object 1" and label "subject object 2" shown in the figure). In some embodiments, the terminal device 110 displays only the contour identification information corresponding to the subject object, displays only the object indicator corresponding to the subject object, or displays the contour identification information and the object indicator at same time.

Further, in response to receiving a selection on the subject object 412, a selection on the contour representation information 415, and/or a selection on the object indicator 416, the terminal device 110 determines to receive a selection on the subject object 412. The terminal device 110 may determine a layer corresponding to the subject object 412 as the third layer.

As shown in FIG. 4B, in the edit interface 400B, the layer corresponding to the target image 410 is the first layer, the layer corresponding to the first effect object (for example, the plurality of clouds shown in FIG. 4B) is the second layer, and the layer corresponding to the subject object 412 is the third layer. The terminal device 110 renders the second layer on the first layer, and then renders the third layer on the second layer. Thus, the subject object 412 is rendered on the top layer so as not to be occluded by the first effect object, and the subject object 411 may be occluded by the first effect object (depending on the placement position of the first effect object). In this way, the user may self-select which subject objects are presented at the top layer of the target image (that is, the user may select which subject objects are not occluded by the first effect object, and select which subject objects are occluded by the first effect). At the same time of capable of realizing the sandwich presentation of the effect object, the user is allowed to self-select the subject object presented on the top layer of the image, the diversified effect edit requirements of the user are satisfied, and the use experience of the user on the effect can be further improved. It should be understood that when selecting a subject object, the user may be allowed to select only a single subject object placed on the top layer or the user may be allowed to select a plurality of subject objects.

An example of the user selecting one predetermined type of effect object described above, in some embodiments, the user may also select a plurality of predetermined type of effect objects. Specifically, the terminal device 110 may further receive a selection performed by the user on the predetermined type of second effect object. The terminal device 110 may render, in response to the selection on the second effect object, a fourth layer corresponding to the second effect object on the first layer corresponding to the target image. The fourth layer is below the third layer. The fourth layer corresponding to the second effect object may be above or below the second layer corresponding to the first effect object, but the fourth layer is always between the first layer corresponding to the target image and the third layer corresponding to the subject object. In some embodiments, based on the selecting order by the user on the effect object, the terminal device 110 may sort the different effect objects from top to bottom or from bottom to top according to the selecting sequence order by the user for the effect object. The first selected effect object may be at the most bottom or at the most top of the effect object layer. It should be noted that, regardless of the order of the layers corresponding to the effect objects, all the predetermined type of effect objects are always sandwiched between the first layer and the third layer.

In block 230, the terminal device 110 obtains, based on an edit operation or a confirmation operation by the user on the first effect object, an edited target image by determining the edited or confirmed first effect object in the second layer, and the edited target image includes the first layer, the second layer, and the third layer. The editing operation herein may include, for example, at least one of a position moving operation, a direction moving operation, and a scaling operation.

In some embodiments, after the terminal device 110 renders the second layer on the first layer, and then renders the third layer on the second layer, the terminal device 110 may generate a target image including the sandwich effect. The terminal device 110 may further adjust the first effect object in the second layer based on an edit operation by the user on the first effect object. Specifically, the terminal device 110 may adjust the display position of the first effect object in the second layer in response to receiving the position moving operation by the user on the first effect object. The terminal device 110 may adjust a display direction of the first effect object in the second layer in response to receiving a direction moving operation by the user on the first effect object. The terminal device 110 may adjust a display size of the first effect object in the second layer in response to receiving a scaling operation by the user on the first effect object. As shown in FIG. 3D, in response to receiving an edit operation on the effect object 320, the terminal device 110 adjusts a display position, a display direction, and a display size of the effect object 320 in the corresponding layer.

Similarly, in case that the user selects a plurality of predetermined type of effect objects, the terminal device 110 may determine an edited or confirmed effect object in layers respectively corresponding to the plurality of effect objects based on respective edit operations or confirmation operations by the user on the plurality of effect objects. The edited target image includes a plurality of layers corresponding to the plurality of feature objects. For example, if the user selects the second effect object, the terminal device 110 may further determine, based on the edit operation or the confirmation operation by the user on the second effect object, the edited or confirmed second effect object in the fourth layer. The edited target image further includes a fourth layer. It should be noted that, in some embodiments, the edit operation for the second effect object is independent from the edit operation for the first effect object, that is, the edit operations for different effect objects are independent from each other and do not affect each other.

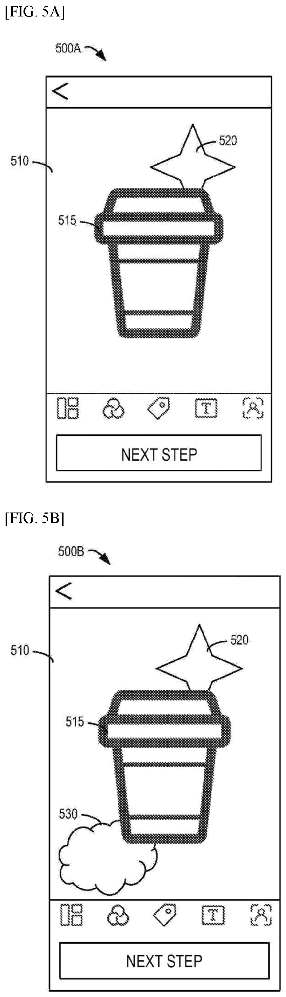

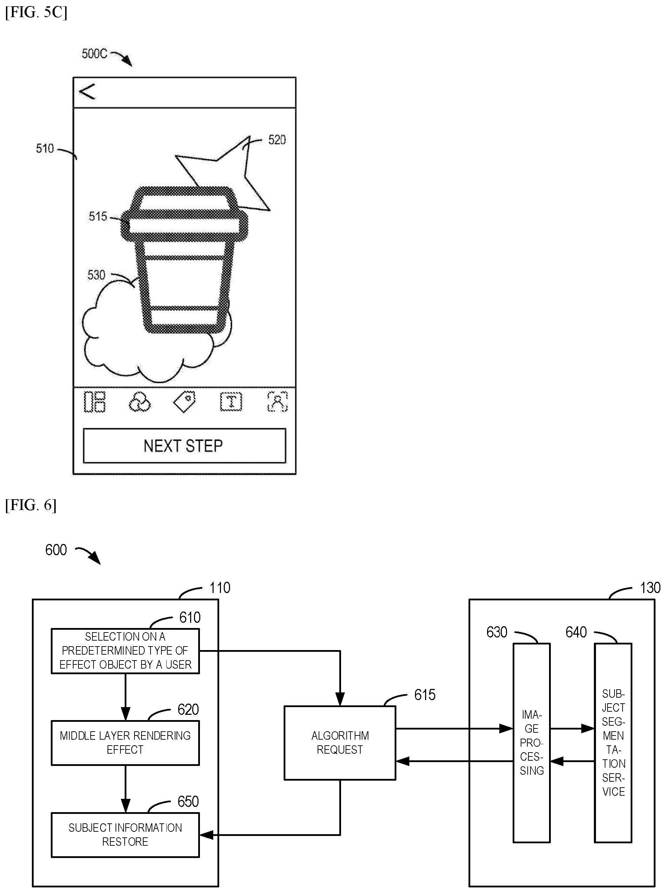

FIG. 5A to FIG. 5C show schematic diagrams of an example edit interface of a target image including a plurality of effect objects according to some embodiments of the present disclosure. As shown in FIG. 5A, the target image 510 in the edit interface 500A includes a first layer where the target image 510 is located, a second layer corresponding to the effect object 520, and a third layer corresponding to the subject object 515. As shown in FIG. 5B, in response to receiving a selection of the user on the effect object 530 (that is, the second effect object), the terminal device 110 may further render a fourth layer corresponding to the effect object 530 between the first layer and the third layer to present the target image 510 shown in the edit interface 500B. As shown in FIG. 5C, the terminal device 110 may further adjust the effect object 520 in the second layer and the effect object 530 in the fourth layer respectively to present the target image 510 shown in the edit interface 500C in response to respective edit operations on the effect object 520 and the effect object 530.

It should be understood that although the first effect object and the second effect object are discussed above, in the actual edit process, the user may add more predetermined type of effect objects to the target image according to needs, and flexibly edit the effect objects according to needs. In some embodiments, in response to the confirmation operation on the at least one effect object, the terminal device 110 may generate a target image including the first layer, the at least one layer of each object of the at least one feature object, and the third layer.

In this way, the user is allowed to freely edit the effect object of the sandwich layer while realizing the sandwich presentation of the effect object, so that the display of the effect object is more flexible.

The user interaction at the terminal device 110 is described above in combination with FIG. 2 to FIG. 5C. In some embodiments, in order to render a layer corresponding to the subject object, the terminal device 110 obtains subject segmentation information of the target image, and the subject segmentation information at least indicates a respective position of the at least one subject object in the target image. The terminal device 110 may extract the at least one subject object from the target image based on the subject segmentation information, and then render the third layer corresponding to the at least one subject object on the second layer (and possibly the fourth layer). In some embodiments, the subject segmentation information may be obtained after the terminal device 110 processes the target image by the subject segmentation algorithm. In some embodiments, the terminal device 110 may upload the target image to another device, for example, the remote server 130, to determine the subject segmentation object, and receive the subject segmentation information from the server 130.

An interaction process between the terminal device 110 and the server 130 is described below with reference to FIG. 6.

FIG. 6 illustrates a schematic diagram of a process 600 of rendering a layer according to some embodiments of the present disclosure.

At block 610, the terminal device 110 generates an algorithm request 615 for requesting an algorithm corresponding to the predetermined type of effect object in response to receiving a selection on a predetermined type of effect object by a user. The predetermined type of effect object here may also be referred to as such as a sandwich template. The algorithm corresponding to the algorithm request 615 may be, for example, a subject segmentation algorithm.

In some embodiments, the terminal device 110 may transmit the generated algorithm request 615 to the server 130 (also referred to as a service device), and obtain an algorithm corresponding to the predetermined type of effect object from the server 130. The terminal device 110 may perform image processing on the target image based on the algorithm to obtain a final target image including the sandwich effect.

The terminal device 110 may transmit the target image and the algorithm request 615 to the server 130 together, so that the server 130 processes the target image. In some embodiments, the terminal device 110 may transmit the target image to the server 130 for processing after obtaining the user authorization.

At block 620, the terminal device 110 renders a second layer corresponding to the selected effect object on the first layer corresponding to the target image, and the second layer may also be referred to as an middle layer.

At block 630, the server 130 receives the algorithm request 615 and the target image. The server 130 may perform corresponding image processing on the target image based on an algorithm corresponding to the algorithm request 615. For example, the server 130 may recognize the subject in the target image based on the subject segmentation algorithm.

At block 640, the server 130 may invoke the subject segmentation task to segment the subject in the target image to determine subject segmentation information of the target image. The subject segmentation information may include, for example, that may identify a position of each subject object in the target image.

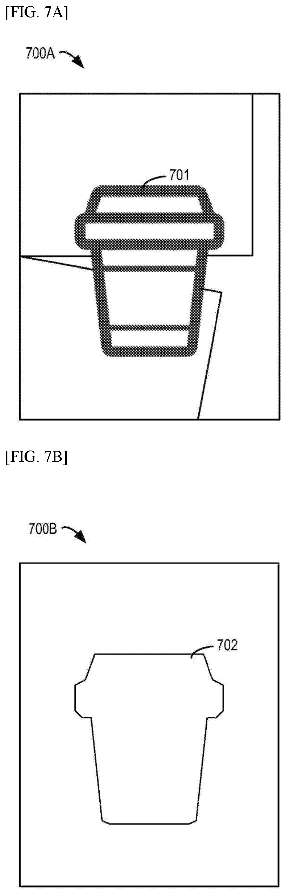

FIG. 7A to FIG. 7C illustrate schematic diagrams of example images for subject segmentation according to some embodiments of the present disclosure. As shown in FIG. 7A, the target image 700A includes a subject object 701 (i.e., a water cup in the figure). The terminal device 110 provides the target image 700A to the server 130, and the server 130 may invoke the subject segmentation task to recognize the subject segmentation information corresponding to the target image 700A with the subject segmentation algorithm . For example, the subject segmentation information may be shown in FIG. 7B. The subject segmentation information may include, for example, a subject segmentation map 700B corresponding to size of the target image. Each subject object has a subject segmentation map, and a pixel value in the subject segmentation map is 0 or 1, 1 indicates that a corresponding pixel position in the target object belongs to a corresponding subject object, and 0 indicates that the corresponding pixel position in the target object does not belong to the corresponding subject object. The server 130 may transmit the subject segmentation map 700B shown in FIG. 7B to the terminal device 110.

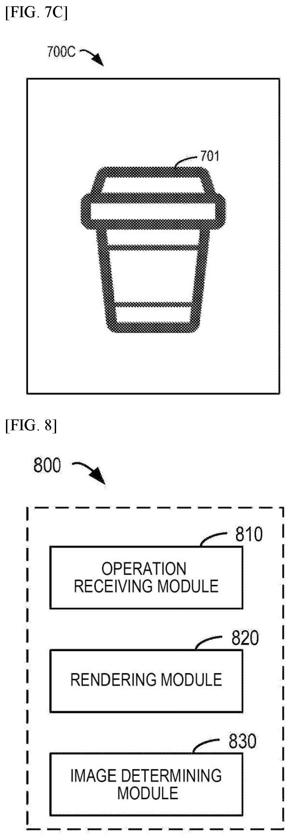

At block 650, the terminal device 110 receives the subject segmentation information transmitted by the server 130, and renders, on the second layer, a third layer (also referred to as a subject information restoration process) corresponding to the subject object of the target image. For example, the terminal device 110 obtains the subject segmentation map 700B shown in FIG. 7B from the server 130, and determines the width, height, start point information, and the like of the subject object based on the contour information 702 of the subject object indicated by the subject segmentation map 700B. The terminal device 110 may generate the third layer 700C corresponding to the subject object shown in FIG. 7C based on the subject segmentation map 700B and the target image 700A. Only the image corresponding to the subject object 701 is included in the third layer 700C. The terminal device 110 may further render the third layer 700C to the second layer corresponding to the effect object.

It may be understood that the subject segmentation process described with respect to the server in FIG. 6 may also be implemented locally on the terminal device 110.

In summary, according to the image edit solution of the present disclosure, the sandwich presentation of the effect object can be realized, and the user is allowed to freely edit the effect object of the sandwich layer to satisfy diversified effect edit requirements of the user. In addition, when the effect object is added to the image, occlusion of the added effect object on the image subject information may be automatically avoided.

FIG. 8 shows a schematic structural block diagram of an apparatus 800 for image editing according to some embodiments of the present disclosure. The apparatus 800 may be implemented or included in the terminal device 110. The various modules/components in the apparatus 800 may be implemented by hardware, software, firmware, or any combination thereof.

As shown in FIG. 8, the apparatus 800 includes an operation receiving module 810 configured to receive, in an edit interface of a target image, a selection on a predetermined type of first effect object by a user. The apparatus 800 further includes a rendering module 820 configured to in response to the selection on the first effect object, render a second layer corresponding to the first effect object on a first layer corresponding to the target image, and render a third layer corresponding to at least one subject object in the target image on the second layer. The apparatus 800 further includes an image determining module 830, configured to obtain, based on an edit operation or a confirmation operation by the user on the first effect object, an edited target image by determining the edited or confirmed first effect object in the second layer, the edited target image comprising the first layer, the second layer, and the third layer.

In some embodiments, the rendering module 820 includes: an identification presenting module configured to present, in response to recognizing a plurality of candidate subject objects from the target image, a subject identification corresponding to respective one of the plurality of candidate subject objects on the edit interface; a selection receiving module configured to receive a selection of a subject identification of the at least one subject object in the plurality of candidate subject objects by the user; and a first rendering module configured to render the third layer corresponding to the at least one selected subject object on the second layer.

In some embodiments, a subject identification corresponding to each subject object comprises at least one of the following: contour identification information for defining the subject object from the target image, or an object indicator presented at a location corresponding to the subject object in the target image.

In some embodiments, the rendering module 820 includes: a segmentation information obtaining module configured to obtain subject segmentation information of the target image, the subject segmentation information at least indicating a respective position of the at least one subject object in the target image; and a subject object extracting module configured to extract the at least one subject object from the target image based on the subject segmentation information; and a second rendering module configured to render the third layer corresponding to the at least one subject object on the second layer.

In some embodiments, the segmentation information obtaining module includes: a transmitting module configured to transmit the target image to a service device; and a receiving module configured to receive the subject segmentation information from the service device.

In some embodiments, the apparatus 800 further includes: a second operation receiving module configured to receive a selection on the predetermined type of second effect object by a user; a third rendering module, configured to in response to the selection on the second effect object, render a fourth layer corresponding to the second effect object on the first layer corresponding to the target image, where the fourth layer is below the third layer; and a second object determining module, configured to determine, based on an edit operation or a confirmation operation by the user on the second effect object, the edited or confirmed second effect object in the fourth layer, where the edited target image further comprises the fourth layer.

In some embodiments, the edit operation of the second effect object is independent from the edit operation of the first effect object.

In some embodiments, the edit operation on the first effect object or the second effect object comprises at least one of: a position moving operation, a direction moving operation, and a scaling operation.

The modules and/or units included in the apparatus 800 may be implemented with various ways, including software, hardware, firmware, or any combination thereof. In some embodiments, one or more modules and/or units may be implemented using software and/or firmware, such as machine-executable instructions stored on a storage medium. In addition to or as an alternative to machine-executable instructions, some or all of the modules and/or units in the apparatus 800 may be at least partly implemented by one or more hardware logic components. As an example rather than a limitation, example types of hardware logic components that may be used include field programmable gate array (FPGA), application specific integrated circuit (ASIC), application specific standard (ASSP), system-on-a-chip (SOC), complex programmable logic device (CPLD), and the like.

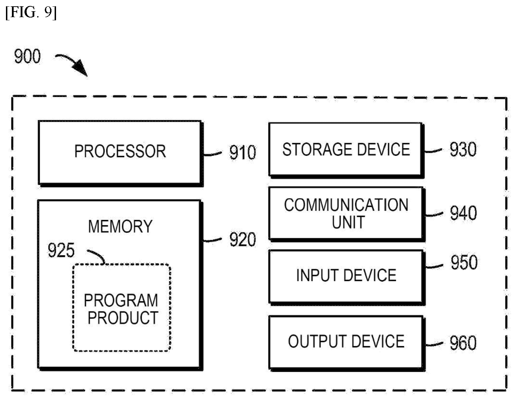

FIG. 9 illustrates a block diagram of an electronic device 900 in which one or more embodiments of the present disclosure may be implemented. It should be understood that the electronic device 900 illustrated in FIG. 9 is merely an example, and should not constitute any limitation on the functionality and scope of embodiments described herein. The electronic device 900 shown in FIG. 9 may be used to implement the terminal device 110 in FIG. 1 or the apparatus 800 in FIG. 8.

As shown in FIG. 9, the electronic device 900 is in the form of a general electronic device. The components of the electronic device 900 may include, but are not limited to, one or more processors or processing units 910, a memory 920, a storage device 930, one or more communication units 940, one or more input devices 950, and one or more output devices 960. The processing units 910 may be an actual or virtual processors and can execute various processes according to the programs stored in the memory 920. In a multiprocessor system, multiple processing units execute computer executable instructions in parallel to improve the parallel processing capability of the electronic device 900.

The electronic device 900 typically includes a plurality of computer storage media. Such media can be any available media that is accessible to the electronic device 900, including but not limited to volatile and non-volatile media, removable and non-removable media. The memory 920 can be volatile memory (such as registers, caches, random access memory (RAM)), nonvolatile memory (such as a read-only memory (ROM), an electrically erasable programmable read-only memory (EEPROM), a flash memory), or some combination thereof. The storage device 930 can be any removable or non-removable medium, and can include machine-readable medium, such as a flash drive, a disk, or any other medium which can be used to store information and/or data and can be accessed within the electronic device 900.

The electronic device 900 may further include additional removable/non-removable, volatile/non-volatile storage medium. Although not shown in FIG. 9, a disk driver for reading from or writing to a removable, non-volatile disk (such as a "floppy disk"), and an optical disk driver for reading from or writing to a removable, non-volatile optical disk can be provided. In these cases, each driver may be connected to the bus (not shown) by one or more data medium interfaces. The memory 920 can include a computer program product 925, which comprises one or more program modules, and these program modules are configured to execute various methods or actions of the various embodiments of the present disclosure.

The communication unit 940 implements communication with other electronic devices via a communication medium. In addition, functions of components in the electronic device 900 may be implemented by a single computing cluster or multiple computing machines, and these computing machines can communicate through a communication connection. Therefore, the electronic device 900 may be operated in a networking environment using a logical connection with one or more other servers, a network personal computer (PC), or another network node.

The input device 950 may be one or more input devices, such as a mouse, a keyboard, a trackball, etc. The output device 960 may be one or more output devices, such as a display, a speaker, a printer, etc. The electronic device 900 may also communicate with one or more external devices (not shown) through the communication unit 940 as required. The external device, such as a storage device, a display device, etc., communicate with one or more devices that enable users to interact with the electronic device 900, or communicate with any device (for example, a network card, a modem, etc.) that enables the electronic device 900 communicate with one or more other electronic devices. Such communication may be executed via an input/output (I/O) interface (not shown).

According to example implementations of the present disclosure, there is provided a computer-readable storage medium having one or more computer instructions stored thereon, where the one or more computer instructions are executed by a processor to implement the method described above.

Various aspects of the present disclosure are described herein with reference to flowcharts and / or block diagrams of the method, the apparatus (system) and the computer program product implemented in accordance with the present disclosure. It should be understood that each block of the flowchart and/or the block diagram, and the combinations of each blocks in the flowcharts and/or block diagrams may be implemented by computer readable program instructions.

These computer-readable program instructions may be provided to the processing units of general-purpose computers, special computers or other programmable data processing devices to produce a machine that generates a device to implement the functions/acts specified in one or more blocks in the flow chart and/or the block diagram when these instructions are executed through the processing units of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions includes a product, which includes instructions to implement various aspects of the functions/acts specified in one or more blocks in the flowchart and/or the block diagram.

The computer-readable program instructions may also be loaded onto a computer, other programmable data processing apparatus, or other devices, so that a series of operational steps can be performed on a computer, other programmable data processing apparatus, or other devices, to generate a computer-implemented process, such that the instructions which execute on a computer, other programmable data processing apparatus, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a module, a program segment or instructions, which contains one or more executable instructions for implementing the specified logic function. In some alternative implementations, the functions marked in the block may also occur in a different order from those marked in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Various implementations of the present disclosure have been described above. The above description is example, not exhaustive, and is not limited to the disclosed implementations. Without departing from the scope and spirit of the described implementations, many modifications and changes are obvious to ordinary skilled in the art. The selection of terms used in this article aims to best explain the principles, practical application or improvement of technology in the market of each implementation, or to enable other ordinary skilled in the art to understand the various implementations disclosed herein.

## Claims

1. A method of image editing, comprising:
receiving, in an edit interface of a target image, a selection on a predetermined type of first effect object by a user;
in response to the selection on the first effect object,
rendering a second layer corresponding to the first effect object on a first layer corresponding to the target image, and
rendering a third layer corresponding to at least one subject object in the target image on the second layer; and
obtaining, based on an edit operation or a confirmation operation by the user on the first effect object, an edited target image by determining the edited or confirmed first effect object in the second layer, the edited target image comprising the first layer, the second layer, and the third layer.

2. The method of claim 1, wherein rendering the third layer corresponding to the at least one subject object in the target image on the second layer comprises:
presenting, in response to recognizing a plurality of candidate subject objects from the target image, a subject identification corresponding to respective one of the plurality of candidate subject objects on the edit interface;
receiving a selection of a subject identification of the at least one subject object in the plurality of candidate subject objects by the user; and
rendering the third layer corresponding to the at least one selected subject object on the second layer.

3. The method of claim 2, wherein a subject identification corresponding to each subject object comprises at least one of the following:
contour identification information for defining the subject object from the target image, or
an object indicator presented at a location corresponding to the subject object in the target image.

4. The method of claim 1, wherein rendering the third layer corresponding to the at least one subject object in the target image on the second layer comprises:
obtaining subject segmentation information of the target image, the subject segmentation information at least indicating a respective position of the at least one subject object in the target image; and
extracting the at least one subject object from the target image based on the subject segmentation information; and
rendering the third layer corresponding to the at least one subject object on the second layer.

5. The method of claim 4, wherein obtaining the subject segmentation information of the target image comprises:
transmitting the target image to a service device; and
receiving the subject segmentation information from the service device.

6. The method of claim 1, further comprising:
receiving a selection on the predetermined type of second effect object by a user,
in response to the selection on the second effect object,
rendering a fourth layer corresponding to the second effect object on the first layer corresponding to the target image, wherein the fourth layer is below the third layer; and
determining, based on an edit operation or a confirmation operation by the user on the second effect object, the edited or confirmed second effect object in the fourth layer,
wherein the edited target image further comprises the fourth layer.

7. The method of claim 6, wherein the edit operation of the second effect object is independent from the edit operation of the first effect object.

8. The method of any of claims 1 to 7, wherein the edit operation on the first effect object or the second effect object comprises at least one of: a position moving operation, a direction moving operation, and a scaling operation.

9. An apparatus for image editing, comprising:
a selection receiving module configured to receive, in an edit interface of a target image, a selection on a predetermined type of first effect object by a user;
a rendering module configured to in response to the selection on the first effect object, render a second layer corresponding to the first effect object on a first layer corresponding to the target image, and render a third layer corresponding to at least one subject object in the target image on the second layer; and
an image determining module configured to obtain, based on an edit operation or a confirmation operation by the user on the first effect object, an edited target image by determining the edited or confirmed first effect object in the second layer, the edited target image comprising the first layer, the second layer, and the third layer.

10. An electronic device, comprising:
at least one processing unit; and
at least one memory, the at least one memory being coupled to the at least one processing unit and storing instructions for execution by the at least one processing unit, the instructions, when executed by the at least one processing unit, causing the device to perform the method of any of claims 1 to 8.

11. A computer-readable storage medium having a computer program stored thereon that, when executed by a processor, implements the method of any of claims 1 to 8.
